# EUROPEAN PATENT SPECIFICATION

(11) **EP 1 510 849 B1**
(45) Date of publication and mention of the grant of the patent: **03.11.2010**
(21) Application number: 04020251.7
(22) Date of filing: 26.08.2004
(51) Int. Cl.: G02B 27/01, G01D 1/00

(54) **A virtual display device for use in a vehicle**
Virtuelles Anzeigegerät für ein Fahrzeug
Dispositif d'affichage virtuel pour un véhicule

(30) Priority: 29.08.2003 IT TO20030662
(43) Date of publication of application: 02.03.2005
(73) Proprietor: C.R.F. Società Consortile per Azioni, 10043 Orbassano (TO) (IT)
(72) Inventor: Repetto, Piermario, 10043 Orbassano (Torino) (IT); Bernard, Stefano, 10043 Orbassano (Torino) (IT); Liotti, Luca, 10043 Orbassano (Torino) (IT); Pallaro, Nereo, 10043 Orbassano (Torino) (IT)
(74) Representative: Deambrogi, Edgardo

(56) References cited:
- EP-A- 0 330 184
- EP-A- 0 666 547
- WO-A1-00/52563
- DE-A- 10 130 046
- GB-A- 2 308 036
- US-A- 4 028 725
- US-A- 6 091 546
- US-A1- 2002 194 914

## Description

The present invention relates in general to a vehicle instrument panel, that is to say a control system arranged on a structure provided with one or more panels carrying adjustment or measurement devices, indicator instruments, display devices and the like able to allow a driver to control the vehicle conditions.

It is known that instrument panels of some current vehicles are provided with processors able to receive signals from devices disposed in the vehicle, and to present the driver with corresponding information in an organic and unitary manner by means of a display device.

Because of the constraints on space within the interior of a passenger compartment of motor vehicles, such on-board computers are generally disposed in positions to one side of and/or lower than the head of the driver. This arrangement forces the driver temporarily to take his eyes from the road in order to be able to read the information appearing on the display.

This, naturally, can give rise to a dangerous situation which is more likely the heavier and more intense the traffic, and in general when obstructions to be avoided and the variations in the path to be travelled by the vehicle are more frequent.

US-A-6 091 546 discloses an eyeglass interface system which integrates interface systems within eyewear. This system may comprise a separate processor unit which is disposed on a support structure wearable by the user. The connections between the sub-units of the system are wireless.

US 2002/194914 A1 discloses a system for tracking the motion of an object relative to a moving reference frame.

US-A-4 028 725 discloses a head-mounted display system for a vehicle instrument panel. This system includes a pair of photodetectors mounted on the vehicle, and a pair of light emitters mounted on the user's helmet, which cooperate to allow a measurement of the coordinates of the user's head in a reference system of the vehicle.

DE 101 30 046 A discloses a device for displaying data. According to this device, a visual information of critical importance is displayed in the central region of the field of view around the direction in which the user's head is pointing, and the remaining information is displayed in peripheral regions of this field of view.

EP-A-0 666 547 discloses an image display apparatus, which comprises means for tracking the eye operable to measure the coordinates of the user's pupil.

GB-A-2 308 036 discloses a head mounted display including sensor means for detecting the brightness of the background.

WO 00/52563 discloses a head tracker system comprising an optical sensor and a plurality of markings respectively disposed on the user's helmet and on the vehicle.

The object of this invention is to provide an instrument panel, which eliminates or at least reduces the occurrence of dangerous situations resulting from the above-mentioned disadvantages. A similar object is dealt with by EP-A-0 330 184, which discloses a display arrangement according to the preamble of claim 1.

This object is achieved according to the invention by a display arrangement for an instrument panel of a motor vehicle having the characteristics defined in the claims.

One preferred, but non-limitative embodiment of the invention will now be described making reference to the attached drawings, in which:
Figure 1 is a block diagram, which illustrates an embodiment of a vehicle instrument panel provided with the display arrangement according to the present invention;
Figure 2 is a principle scheme, which illustrates the configuration of the panel display arrangement illustrated in Figure 1; and
Figures 3 to 5 are representations which illustrate examples of use of the display arrangement of the invention.

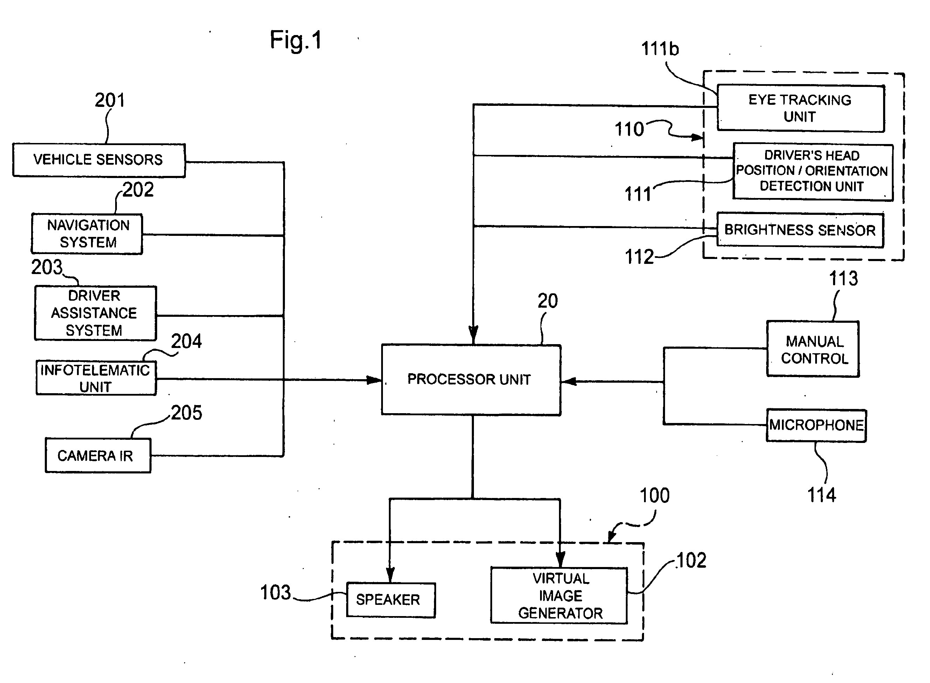

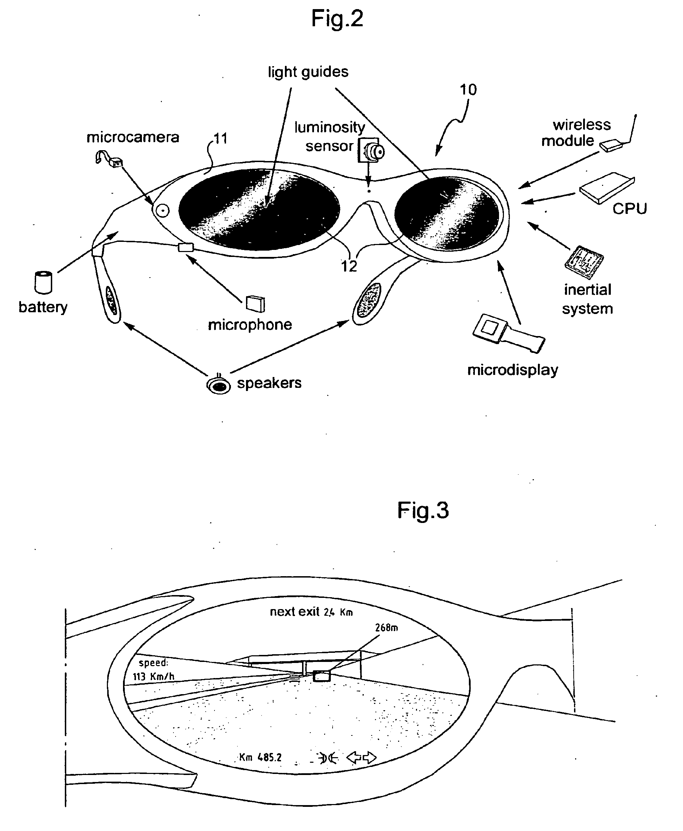

With reference to Figures 1 and 2, a vehicle instrument panel essentially comprises an interface unit 10 (illustrated in Figure 2) wearable by the driver (not illustrated), and a processor unit 20 to which the said interface unit 10 is operatively connected, able to receive data relating to the vehicle, the journey, or the driving conditions, from various on-board systems (described in more detail hereinbelow) and to process this data and to generate audio-visual information to present to the driver.

The processor unit 20 is preferably integrated on the vehicle on such a way as to reduce to a minimum the computational load of the interface 10; in another preferred embodiment the processor unit can be constituted by two sub-units, one of which is integrated on the vehicle and one integrated on the wearable interface 10, the two being connected together by cable or by "wireless" connection (for example via radio frequency or infrared).

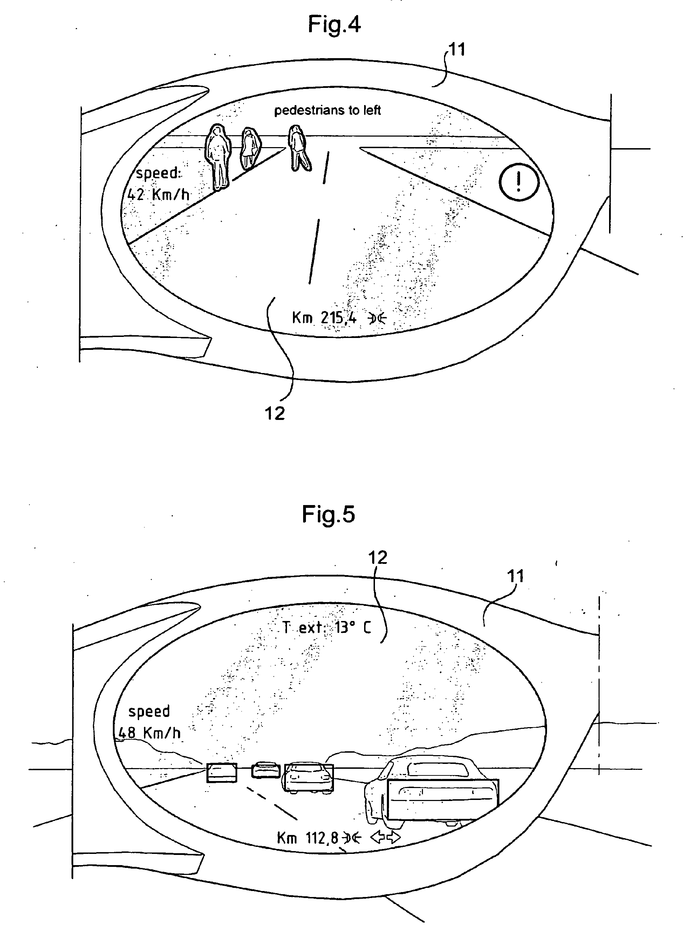

With reference to Figure 2, the interface unit 10 comprises a support structure 11 which can be worn by the driver, on which is mounted at least one transparent screen element 12 which can be positioned in front of at least one of the driver's eyes (see Figures 3 to 5). Preferably, the support structure 11 is formed by a spectacle frame assembly with the transparent screen element 12 being formed by the lenses of these spectacles. This preferred embodiment will always be referred to hereinafter. However, the support structure 11 and the transparent screen element 12 can have another form, for example that of a helmet with an associated visor.

The wearable interface unit 10 includes information rendering means 100, disposed on the support structure 11, for rendering information from the processor unit 20. This information can be of video and/or audio type. These rendering means 100 include a virtual image generator 102 operable to generate a virtual image and to present it to the driver's eyes through the transparent screen 12 at a predetermined distance, the said virtual image being superimposed on the scene visible to the driver through the transparent screen 12. If the distance at which the virtual image is presented is sufficiently large (for example greater than 5 metres) the driver's eye is able to focus on the retina both the background and the virtual image generated by the means 102 with a minimum accommodation. To this end the virtual image generator 102 includes miniaturised image formation means, for example of liquid crystal (LCD), or cathode ray tube (CRT), or organic light emitter device (OLED) type, operable to form a synthetic real image, and an optical system for transformation of the said real image into a virtual image located at a certain distance from the observer and visible to the driver through the transparent screen 12. The transformation of the synthetic image from real to virtual serves to present the video information to the driver at a predetermined distance from the eyes in such a way as to minimise the accommodation of the focal distance. Moreover, the virtual image is presented in such a way that the information of critical importance is displayed in high-resolution regions of the field of view (close to the fovea of the eye) and rapidly accessible. Information which is not critical for safety can be displayed in marginal regions of the field of view, for example at the top (possibly superimposed over the overhead light) or at the bottom (possibly superimposed over the dash board). Preferably, the virtual image is selectively positionable within the field of view of the user by mechanical and/or electronic and/or software means in such a way as to optimise the visibility and usableness of the information presented. The virtual image can be presented to only one or to both eyes, and may or may not contain the same information for both eyes. For example, the field of view subtended by the image presented to the right eye may be only partially superimposed over the field of view subtended by the image presented to the left eye. The information rendering means 100 preferably further include a speaker 103 able to make a sound signal available to the driver.

The wearable interface unit 10 further include sensor means 110, also disposed on the support structure 11, operable to perceive a physical signal from the operator and/or from the surrounding environment, and to make available a corresponding electrical signal representative of this physical signal. The sensor means 110 further include a unit 111 for detection of the position and/or orientation of the driver's head. In a variant of the invention the driver's head position and/or orientation detection unit 111 is constituted by an inertial measurement unit integrated entirely on the wearable interface unit 10; in a further variant of the invention the position/orientation unit 111 includes an inertial measurement unit integrated on the wearable interface unit and a non-inertial measurement unit (for example of the mechanical, magnetic, optical or ultrasonic type) partly integrated on the wearable interface unit 10 and partly integrated on the vehicle.

The visual information can be rendered to the user in a manner related fixedly to the vehicle's frame of reference, similar to what occurs in a traditional instrument panel: this is done for all the information for which a spatial correlation between the virtual image and the environment surrounding the vehicle (or background) over which this virtual image is superimposed is not required. This is the case, for example, with vision-aid systems, for example for improving the night vision (described hereinafter), in which the sensors used are conventionally integrated on the vehicle and therefore fixedly related with it.

If the head position/orientation detection unit 111 is constituted by an inertial measurement unit integrated on the wearable interface unit 10 this unit 111 will provide inertial coordinates, that is to say referred to the frame of reference of the ground (that is the environment surrounding the vehicle); to obtain the inertial coordinates of the user's head with respect to the frame of reference of the vehicle the coordinates with respect to the frame of reference of the ground are corrected by taking into account the inertial coordinates of the vehicle detected by a vehicle navigation system (described hereinafter).

In another variant of the invention, more suitable if the virtual image is not correlated with the environment surrounding the vehicle, but rather with the interior of the vehicle, the head position/orientation detection unit 111 comprises a measurement unit of non-inertial type, that is to say one adapted to measure directly the coordinates of the head in the frame of reference of the vehicle. Preferably, this measurement unit comprises a video camera of the optical sensor matrix type, for example CCD or CMOS, integrated on the interface unit 10 in such a position that a plurality of position-locating means are present in the field of view of the video camera. The recognition in real time of the position-locating means makes it possible for the detection unit 111 to identify the position of the user's head with respect of the position-locating means and therefore its coordinates with respect to the vehicle.

To this end the position-locating means are constituted by visual indicator means, for example an LED operating with visible or infrared radiation. Alternatively, such LEDs are integrated on the interface unit 10 and the position-locating means are constituted by simple reflectors which receive the radiation from the LEDs and reflect it towards the video camera integrated on the interface unit 10.

In an alternative configuration the video camera is integrated on the vehicle, whilst the position-locating means are integrated on the interface unit 10.

The data from the head position/orientation detection unit 111 may be neither inertial coordinates nor non-inertial coordinates, but rather raw or only partially conditioned sensor data which are sent to the processor unit 20 and there processed to obtain the coordinates of the head; this is necessary if it is decided to reduce to the minimum the computational power and the memory integrated in the wearable interface unit 10 by delegating the more onerous calculations to non-wearable subunits of the system, that is to say by having them integrated on the vehicle.

Preferably, the sensor means 110 further include an "eye tracking" position unit 111b for measuring the coordinates of the pupil with respect to the frame of reference of the head and therefore the direction in which the driver is looking The data coming from the unit 111b are transmitted to the processor unit 20 in a manner similar to that which takes place for data coming from the unit 111.

As well as the primary function of measuring the position of the pupil, the eye tracking system 111b can be also utilised for monitoring the driver's attention and prevent accidents caused by dropping to sleep. The eye tracking system can also be utilised simultaneously for identification of the driver through retinal recognition.

The sensor means 110 further include an ambient illumination sensor 112 operable to detect the brightness of the environment surrounding the driver, in such a way as to make it possible to adapt the illumination and the colour of the virtual image presented to the driver to that of the real image, thereby optimising the contrast and visibility. In one possible embodiment the function of measuring the brightness, effected by the brightness sensor 112, is achieved via the same optical sensor matrix as is utilised for the non-inertial measurement unit previously mentioned. The adaptation of the brightness of the virtual image can be obtained by means of screen of variable transmittance capable of varying the transmittance of the optical virtual display system and/or the brightness of the miniaturised means for forming the images in dependence of the ambient luminance in such a way as to optimise the contrast.

In an alternative embodiment the interface unit 10 is formed by two separately wearable sub-units connected to one another by a cable or via "wireless" connection (for example radio frequency or infrared), one of which is integrated on the visor or helmet and the other carried on an article of clothing.

Other interface devices are also provided, disposed on the vehicle's instrument panel, that is to say one or more manually controllable devices 113 of conventional type, and a microphone 114 prearranged to be able to transmit a voice command to the processor unit 20. Preferably, the microphone 114 is also integrated on the support structure 11 of the wearable interface unit 10. These devices make it possible, in a known manner, to select the type of data to be displayed, and possibly their manner of presentation (colour, dimension, position), or to interact with other systems of the vehicle.

Operatively connected to the processor unit 20 are on-board devices and systems of the type normally utilised for the provision to the user of information about the vehicle and its operating conditions. For example, in the case of motor vehicles, such devices and systems include sensor means 201 comprising any type of known sensor which can be installed in modern motor vehicles to detect signals relating to the operating conditions and functionality of the vehicle (for example temperature, pressure and coolant liquid level signals and the like), a trip data processor (or "trip computer") to process data relating to the fuel consumption, average speed, number of kilometres travelled and the like, a navigation system 202 (equipped, for example, with vehicle inertial sensors, a GPS receiver and a database of maps), driver assistance systems 203 (for example a "lane warning" system for automatically detecting the position of the vehicle with respect to the edges of the roadway, an "overtake warning" system for controlling the overtaking manoeuvre, an "adaptive cruise control" system for control of the cruising speed and safe distances, a "stop & go" system for control of the speed and safe distances in low speed tail back conditions), a infotelematic unit 204 connected to a network according to the GSM/GPRS or UMTS protocols, and a night vision assistance system for night vision of the road, including an infrared video camera 205. The connection between the processing unit 20 and the above-mentioned on-board devices/systems can be achieved by a cable or by "wireless" connection (for example by a radio frequency or infrared); the "wireless" mode of connection may be unnecessary if at least one subunit of the processor unit 20 is integrated in the wearable interface unit 10.

The processor unit 20 processes the signals from the on-board systems in a conventional manner to provide for generation of video and audio signals containing the information to be delivered to the driver. The data relating to the position of the driver's head with respect to the vehicle and/or the background, and the position of the pupil with respect to the head are utilised by the processor unit 20 to determine, on the basis of the access priority, the distribution of individual elements of information within the driver's field of view. The processor unit 20 therefore transmits the video signal to the virtual image generator 102 in a known manner (via cable or via radio), which latter provides for the associated display to be superimposed on the image viewed directly by the driver and the audio signal at the speakers 103.

In Figures 3 to 5 are shown examples of application of the wearable interface unit 10 whilst driving a motor vehicle. In these examples, in which the interface unit 10 is formed as spectacles, the information is displayed in predetermined portions of the driver's field of view defined by the lenses 12 of the spectacles 11. Preferably, the information relating to the function of the vehicle (for example data on speed, engine speed, fuel level, oil temperature, kilometres travelled, turning point indicator etc.) are displayed in peripheral zones of the field of view (for example at the bottom), whilst those relating to the vision assistance (for example for night vision) or to failure indications, imminent dangers or malfunctions are displayed in the central zone of the field of view (corresponding to the path of the vehicle), and those relating to navigation are displayed in the zones of the field of view relating to the rendered navigation information (for example turning point indication, clearance etc.). The peripheral region of the field of view, dedicated to data relating to the function of the vehicle, can also be occlusive type, that is not allowing the.background to be seen: this can allow an increase in contrast.

More preferably still, part of the information (for example data on speed, engine speed, fuel level, oil temperature, kilometres travelled, etc.) is presented to the user in a permanent manner as takes place in a current on-board instrument panel, in such a way that the overall effect is that of having a virtual instrument panel superimposed over part of the scene, that is the environment surrounding the vehicle, and in part within the vehicle.

In an advantageous embodiment the overall field of view processed by the system is greater than that which is presented instantaneously to the driver, who can thus displace his head within the overall field of view with movements of the head and/or rotation of the pupil. With respect to the previously-described embodiment, this configuration allows the use of image-formation means of lower resolution in that only a part of the virtual instrument panel is presented at any instant to the driver. Moreover, the optical virtual display system works on a narrower field of view which makes this optical system simpler, lighter and of lower cost. Finally, the driver only sees information presented within a narrow field of view, centred about the direction in which the driver's head is pointing or in which the driver is looking: this is ergonomically advantageous in that the information presented is limited and makes it possible not to distract or confuse the driver.

As will be appreciated, although the display arrangement has been illustrated as a replacement of the traditional on-board instrument panel display devices it can however be utilised as a complement to such on-board instrument panels to present information of assistance to the driver essential for safety.

Naturally, the principle of the invention remaining the same, the details of construction and the embodiments can be widely varied with respect to what has been described and illustrated, without by this departing from the scope of the invention.

## Claims

1. A display arrangement (10) for a vehicle instrument panel which can be controlled by a vehicle user, comprising:
- a support structure (11) wearable by the user, on which is disposed at least one transparent screen element (12) which can be positioned in front of at least one of the user's eyes in such a way as to permit the user to see at least part of the background through this screen;
- virtual image generator means (102) disposed on the said support structure (11), operable to generate a virtual image variable in time and to present it to the user's eyes through the transparent screen (12) at a predetermined distance, the said virtual image being superimposed on the scene visible by the user through the transparent screen (12);
- means (111) for detecting the position and orientation of the user's head, at least partly disposed on the said support structure (11); and
- a processor unit (20) operatively connected to a plurality of vehicle control systems, operable to provide to the said virtual image generator means (102) a video signal containing information to deliver to the user on the basis of system signals provided by the said plurality of control systems in such a way that the said virtual image generator (102) generates a corresponding virtual visual information superimposed over the background in predetermined regions of the field of view, the said visual information being rendered stationary with respect to a frame of reference predetermined on the basis of a detection signal from the said means (111) for detection of the position and orientation of the user's head;
**characterised in that**
the means (111) for detecting the position and orientation of the user's head include a video camera comprising a matrix of optical sensors and a plurality of position-locating reference members respectively disposed on the support structure (11) and on the vehicle, which cooperate to allow a measurement of the coordinates of the user's head in a reference system of the vehicle;
wherein the said position-locating reference members are able to reflect visible or infrared radiation emitted by visible or infrared radiation emitter means disposed on the wearable interface unit (10).

2. An arrangement according to Claim 1, in which the said virtual image generator means (102) comprise miniaturised image formation means operable to form a synthetic real image, and an optical system for transformation of the said real image into a virtual image positioned at a certain distance from the user, the said virtual image being visible to the user through the transparent screen (12) and superimposed on the background.

3. An arrangement according to Claim 1 or Claim 2, in which the said processor unit (20) is at least partly disposed on the said support structure (10).

4. An arrangement according to Claim 3, in which the said processor unit (20) is in part disposed on the vehicle.

5. An arrangement according to Claim 3, in which the said processor unit (20) is in part disposed on an auxiliary support structure separate from the said first support structure (10) and also wearable by the user.

6. An arrangement according to any preceding claim, in which the said means (111) for detection of the position and orientation of the user's head includes an inertial measurement unit disposed on the said support structure (10).

7. An arrangement according to any preceding Claim, in which the said video camera is a CCD or CMOS video camera.

8. An arrangement according to Claim 6, in which the said inertial measurement unit is able to measure the coordinates of the user's head in a frame of reference of the environment surrounding the vehicle.

9. An arrangement according to Claim 8, in which the said processor unit (20) is able to compensate the coordinates of the user's head with respect to the frame of reference of the environment surrounding the vehicle with the coordinates of the vehicle with respect to the frame of reference of the environment surrounding the vehicle, the said coordinates of the vehicle being provided by a navigation unit (202) installed on the vehicle to derive the coordinates of the head with respect to the vehicle's frame of reference.

10. An arrangement according to any preceding claim, in which part of the visual information is displayed fixed in relation to the vehicle's frame of reference and part of the visual information is displayed fixed in relation to the frame of reference of the environment surrounding the vehicle.

11. An arrangement according to Claim 10, in which the part of the visual information which is fixed in relation to the frame of reference of the environment surrounding the vehicle relates to navigation information generated in a direct or indirect manner by the navigation unit (202) installed on the vehicle.

12. An arrangement according to any preceding claim, in which the information of critical importance is displayed in the central region of the field of view around the direction in which the user's head is pointing, and the remaining information is displayed in peripheral regions of this field of view.

13. An arrangement according to any preceding claim, in which the field of view presented instantaneously to the user is smaller than the overall field of view processed by the central unit (20) so that the user is able to access the information presented outside the instantaneous field of view by rotation of the head, the said rotation being detected by the said position detection means (111) for detecting the position and rotation of the user's head.

14. An arrangement according to any preceding claim, in which means (111b) are provided for tracking the eye operable to measure the coordinates of the user's pupil, that is to say the direction in which the user is looking.

15. An arrangement according to Claim 14, in which the information of critical importance is displayed in the region of the field of view close to the said direction in which the user is looking, independently of the direction in which the user's head points, and the remaining information is displayed in the peripheral regions of this field of view.

16. An arrangement according to Claim 14, in which the field of view presented instantaneously to the user is smaller than the overall field of view processed by the central unit (20) so that the user is able to access the information present outside the instantaneously presented field of view by rotation of the pupil, the said rotation being detected by the said eye tracking means (111b).

17. An arrangement according to any preceding claim, further including means for transmitting (103) and/or receiving (114) sound signals, operable to allow the user to receive audio information from the said processor unit (20), the said audio information being complementary to the video information generated by the image generation means (102), and to control and/or configure the said processor unit (20) by voice.

18. An arrangement according to any preceding claim, further including sensor means (112) for detecting the brightness of the background.

19. An arrangement according to any preceding claim, in which the said support structure (11) is formed by a spectacle frame, the said transparent screen element (12) being formed by the lenses of such spectacles.

20. An arrangement according to any of Claims 1 to 18, in which the said support structure (11) is formed by a helmet, the said transparent screen element (12) being formed by the visor of this helmet.

21. An arrangement according to any preceding claim, in which the wearable interface unit (10) is battery operated.

22. An arrangement according to any preceding claim, in which at least some of the connections between the sub-units of the system are formed wireless, via radio frequency or infrared signals.

23. An arrangement according to any preceding claim, the said arrangement being provided to be installed in motor vehicles, automobiles or boats.

24. An arrangement according to any preceding claim, the said arrangement being provided as a complement to a traditional on-board instrument panel.

25. An arrangement according to any preceding claim, the said arrangement being provided in substitution for a traditional on-board instrument panel.

26. An arrangement according to Claim 14 in which the said eye tracking means (111b) are also provided to monitor the state of attention of the driver for the purposes of preventing accidents.

## Patentansprüche

1. Anzeigeanordnung (10) für ein Fahrzeug-Armaturenbrett, die durch einen Fahrzeugbenutzer gesteuert werden kann, wobei sie umfasst:
eine Tragestruktur (11), die von dem Benutzer getragen werden kann und auf der wenigstens ein transparentes Bildschirmelement (12) angeordnet ist, das so vor wenigstens einem der Augen des Benutzers positioniert werden kann, dass der Benutzer durch diesen Bildschirm hindurch wenigstens einen Teil des Hintergrundes sehen kann;
eine Einrichtung (102) zum Erzeugen eines virtuellen Bildes, die an der Tragestruktur (11) angeordnet ist und so betrieben werden kann, dass sie ein zeitlich veränderliches virtuelles Bild erzeugt und es den Augen des Benutzers über den transparenten Bildschirm (12) in einem vorgegebenen Abstand darstellt, wobei das virtuelle Bild über die Szene gelegt ist, die für den Benutzer durch den transparenten Bildschirm (12) hindurch sichtbar ist;
eine Einrichtung (111) zum Erfassen der Position und der Ausrichtung des Kopfes des Benutzers, die wenigstens teilweise an der Tragestruktur (11) angeordnet ist; und
eine Verarbeitungseinheit (20), die funktionell mit einer Vielzahl von Fahrzeug-Steuersystemen verbunden ist und so betrieben werden kann, dass sie der Einrichtung (102) zum Erzeugen eines virtuellen Bildes ein Videosignal, das Informationen zum Zuführen zu dem Benutzer enthält, auf Basis von Systemsignalen, die durch die Vielzahl von Steuersystemen bereitgestellt werden, so bereitstellt, dass die Einrichtung (102) zum Erzeugen des virtuellen Bildes entsprechende virtuelle visuelle Informationen erzeugt, die in vorgegebenen Bereichen des Sichtfeldes über den Hintergrund gelegt werden, wobei die visuellen Informationen in Bezug auf einen Bezugsrahmen stationär dargestellt werden, der auf Basis eines Erfassungssignals von der Einrichtung (111) zum Erfassen der Position und der Ausrichtung des Kopfes des Benutzers vorbestimmt wird;
**dadurch gekennzeichnet, dass**
die Einrichtung (111) zum Erfassen der Position und der Ausrichtung des Kopfes des Benutzers eine Videokamera, die eine Matrix aus optischen Sensoren umfasst, und eine Vielzahl von Positionsortungs-Bezugselementen enthält, die an der Tragestruktur (11) bzw. dem Fahrzeug angeordnet sind und zusammenwirken, um eine Messung der Koordinaten des Kopfes des Benutzers in einem Bezugssystem des Fahrzeugs zu ermöglichen;
wobei die Positionsortungs-Bezugselemente in der Lage sind, sichtbare oder infrarote Strahlung zu reflektieren, die durch Einrichtungen zum Emittieren sichtbarer oder infraroter Strahlung emittiert wird, die an der tragbaren Schnittstelleneinheit (10) angeordnet sind.

2. Anordnung nach Anspruch 1, wobei die Einrichtung (102) zum Erzeugen eines virtuellen Bildes eine miniaturisierte Bilderzeugungseinrichtung, die so betrieben werden kann, dass sie ein synthetisches reales Bild erzeugt, sowie ein optisches System zum Transformieren des realen Bildes in ein virtuelles Bild umfasst, das in einem bestimmten Abstand zu dem Benutzer positioniert ist, wobei das virtuelle Bild für den Benutzer über den transparenten Bildschirm (12) sichtbar ist und über den Hintergrund gelegt ist.

3. Anordnung nach Anspruch 1 oder Anspruch 2, wobei die Verarbeitungseinheit (20) wenigstens teilweise an der Tragestruktur (10) angeordnet ist.

4. Anordnung nach Anspruch 3, wobei die Verarbeitungseinheit (20) teilweise an dem Fahrzeug angeordnet ist.

5. Anordnung nach Anspruch 3, wobei die Verarbeitungseinheit (20) teilweise an einer Hilfs-Tragestruktur angeordnet ist, die separat von der ersten Tragestruktur (10) ist und ebenfalls von dem Benutzer getragen werden kann.

6. Anordnung nach einem der vorangehenden Ansprüche, wobei die Einrichtung (111) zum Erfassen der Position und der Ausrichtung des Kopfes des Benutzers eine Trägheits-Messeinheit enthält, die an der Tragestruktur (10) angeordnet ist.

7. Anordnung nach einem der vorangehenden Ansprüche, wobei die Videokamera eine CCD- oder CMOS-Videokamera ist.

8. Anordnung nach Anspruch 6, wobei die Trägheits-Messeinheit in der Lage ist, die Koordinaten des Kopfes des Benutzers in einem Bezugsrahmen der Umgebung zu messen, die das Fahrzeug umgibt.

9. Anordnung nach Anspruch 8, wobei die Verarbeitungseinheit (20) in der Lage ist, die Koordinaten des Kopfes des Benutzers hinsichtlich des Bezugsrahmens der Umgebung, die das Fahrzeug umgibt, mit den Koordinaten des Fahrzeugs hinsichtlich des Bezugsrahmens der Umgebung zu kompensieren, die das Fahrzeug umgibt, und die Koordinaten des Fahrzeugs durch eine Navigationseinheit (202) bereitgestellt werden, die an dem Fahrzeug installiert ist, um die Koordinaten des Kopfes hinsichtlich des Bezugsrahmens des Fahrzeugs herzuleiten.

10. Anordnung nach einem der vorangehenden Anspruche, bei der ein Teil der visuellen Informationen im Verhältnis zu dem Bezugsrahmen des Fahrzeugs stationär angezeigt wird und ein Teil der visuellen Informationen im Verhältnis zu dem Bezugsrahmen der Umgebung, die das Fahrzeug umgibt, stationär angezeigt wird.

11. Anordnung nach Anspruch 10, wobei der Teil der visuellen Informationen, der im Verhältnis zu dem Bezugsrahmen der Umgebung, die das Fahrzeug umgibt, stationär ist, sich auf Navigationsinformationen bezieht, die direkt oder indirekt durch die an dem Fahrzeug installierte Navigationseinheit (202) erzeugt werden.

12. Anordnung nach einem der vorangehenden Ansprüche, wobei die Informationen von wesentlicher Bedeutung in dem Mittelbereich des Sichtfeldes um die Richtung herum angezeigt werden, in die der Kopf des Benutzers zeigt, und die übrigen Informationen in peripheren Bereichen dieses Sichtfeldes angezeigt werden.

13. Anordnung nach einem der vorangehenden Ansprüche, wobei das dem Benutzer unmittelbar angezeigte Sichtfeld kleiner ist als das gesamte Sichtfeld, das durch die Zentraleinheit (20) verarbeitet wird, so dass der Benutzer auf die Informationen, die außerhalb des unmittelbaren Sichtfeldes dargestellt werden, durch Drehung des Kopfes zugreifen kann, und die Drehung durch die Positionserfassungs-Einrichtung (111) zum Erfassen der Position und der Drehung des Kopfes des Benutzers erfasst wird.

14. Anordnung nach einem der vorangehenden Ansprüche, wobei eine Einrichtung (111 b) vorhanden ist, mit der das Auge verfolgt wird und die so betrieben werden kann, dass sie die Koordinaten der Pupille des Benutzers misst, d. h. die Richtung, in die der Benutzer blickt.

15. Anordnung nach Anspruch 14, wobei die Informationen von wesentlicher Bedeutung unabhängig von der Richtung, in die der Kopf des Benutzers zeigt, in dem Bereich des Sichtfeldes in der Nähe der Richtung angezeigt werden, in die der Benutzer blickt, und die übrigen Informationen in den peripheren Bereichen dieses Sichtfeldes angezeigt werden.

16. Anordnung nach Anspruch 14, wobei das Sichtfeld, das dem Benutzer unmittelbar angezeigt wird, kleiner ist als das Gesamt-Sichtfeld, das durch die Zentraleinheit (20) verarbeitet wird, so dass der Benutzer auf die außerhalb des unmittelbar angezeigten Sichtfeldes vorhandenen Informationen durch Drehung der Pupille zugreifen kann und die Drehung durch die Augen-Verfolgungseinrichtung (111b) erfasst wird.

17. Anordnung nach einem der vorangehenden Ansprüche, die des Weiteren eine Einrichtung zum Senden (103) und/oder zum Empfangen (114) von Schallsignalen enthält, die so betrieben werden kann, dass sie es dem Benutzer gestattet, Toninformationen von der Verarbeitungseinheit (20) zu empfangen, wobei die Toninformationen komplementär zu den durch die Bilderzeugungseinrichtung (102) erzeugten Videoinformationen sind, und die Verarbeitungseinheit (20) mittels Stimme zu steuern und/oder zu konfigurieren.

18. Anordnung nach einem der vorangehenden Ansprüche, die des Weiteren eine Sensoreinrichtung (112) zum Erfassen der Helligkeit des Hintergrundes enthält.

19. Anordnung nach einem der vorangehenden Ansprüche, wobei die Tragestruktur (11) durch einen Brillenrahmen gebildet wird und das transparente Bildschirmelement (12) durch die Gläser dieser Brille gebildet wird.

20. Anordnung nach einem der Ansprüche 1 bis 18, wobei die Tragestruktur (11) durch einen Helm gebildet wird und das transparente Bildschirmelement (12) durch das Visier dieses Helms gebildet wird.

21. Anordnung nach einem der vorangehenden Ansprüche, wobei die tragbare Schnittstelleneinheit (10) batteriebetrieben ist.

22. Anordnung nach einem der vorangehenden Ansprüche, wobei wenigstens einige der Verbindungen zwischen den Teileinheiten des Systems drahtlos, über Funkfrequenz- oder Infrarotsignale erzeugt werden.

23. Anordnung nach einem der vorangehenden Ansprüche, wobei die Anordnung zur Installation in Kraftfahrzeugen, Automobilen oder Booten bestimmt ist.

24. Anordnung nach einem der vorangehenden Ansprüche, wobei die Anordnung als eine Ergänzung zu einem herkömmlichen fahrzeugseitigen Armaturenbrett bestimmt ist.

25. Anordnung nach einem der vorangehenden Ansprüche, wobei die Anordnung als Ersatz für ein herkömmliches fahrzeugseitiges Armaturenbrett bestimmt ist.

26. Anordnung nach Anspruch 14, wobei die Augen-Verfolgungseinrichtung (111 b) ebenfalls zum Überwachen des Aufmerksamkeitszustandes des Fahrers zum Verhüten von Unfällen bestimmt ist.

## Revendications

1. Agencement d'affichage (10) pour un tableau de bord de véhicule qui peut être contrôlé par l'utilisateur du véhicule, comportant :
une structure support (11) pouvant être portée par l'utilisateur, sur laquelle est disposé au moins un élément d'écran transparent (12) qui peut être positionné devant au moins l'un des yeux de l'utilisateur de manière à permettre à l'utilisateur de voir au moins une partie de l'arrière plan à travers cet écran ;
un moyen générateur d'images virtuelles (102) disposé sur ladite structure support (11), permettant de générer une image virtuelle variable dans le temps et de la présenter aux yeux de l'utilisateur à travers l'écran transparent (12) à une distance prédéterminée, ladite image virtuelle étant superposée à la scène visible par l'utilisateur à travers l'écran transparent (12) ;
un moyen (111) pour détecter la position et l'orientation de la tête de l'utilisateur, au moins partiellement disposé sur ladite structure support (11) ; et
une unité de processeur (20) reliée de façon fonctionnelle à une pluralité de systèmes de contrôle du véhicule, permettant de délivrer audit moyen générateur d'images virtuelles (102) un signal vidéo contenant une information à délivrer à l'utilisateur en fonction des signaux de systèmes délivrés par ladite pluralité de systèmes de contrôle de manière que ledit générateur d'images virtuelles (102) génère une information visuelle virtuelle correspondante superposée à l'arrière plan dans des régions prédéterminées du champ de vision, ladite information visuelle étant rendue stationnaire par rapport à un cadre de référence prédéterminé en fonction d'un signal de détection provenant dudit moyen (111) pour la détection de la position et de l'orientation de la tête de l'utilisateur ;
**caractérisé en ce que**
le moyen (111) pour détecter la position et l'orientation de la tête de l'utilisateur comprend une caméra vidéo comportant une matrice de capteurs optiques et une pluralité d'éléments de référence de localisation de position respectivement disposés sur la structure support (11) et sur le véhicule, qui coopèrent pour permettre une mesure des coordonnées de la tête de l'utilisateur dans un système de référence du véhicule ;
dans lequel lesdits éléments de référence de localisation de position peuvent réfléchir un rayonnement visible ou infrarouge émis par un émetteur de rayonnement visible ou infrarouge disposé sur l'unité d'interface pouvant être portée (10).

2. Agencement selon la revendication 1, dans lequel ledit moyen générateur d'images virtuelles (102) comporte un moyen de formation d'images miniaturisé permettant de former une image réelle synthétique, et un système optique pour transformer ladite image réelle en une image virtuelle positionnée à une certaine distance de l'utilisateur, ladite image virtuelle étant visible pour l'utilisateur à travers l'écran transparent (12) et superposée à l'arrière plan.

3. Agencement selon la revendication 1 ou la revendication 2, dans lequel ladite unité de processeur (20) est au moins partiellement disposée sur ladite structure support (10).

4. Agencement selon la revendication 3, dans lequel ladite unité de processeur (20) est en partie disposée sur le véhicule.

5. Agencement selon la revendication 3, dans lequel ladite unité de processeur (20) est en partie disposée sur une structure support auxiliaire distincte de ladite première structure support (10) et pouvant être également portée par l'utilisateur.

6. Agencement selon l'une quelconque des revendications précédentes, dans lequel ledit moyen (111) pour détecter la position et l'orientation de la tête de l'utilisateur comprend une unité de mesure inertielle disposée sur ladite structure support (10).

7. Agencement selon l'une quelconque des revendications précédentes, dans lequel ladite caméra vidéo est une caméra vidéo CCD ou CMOS.

8. Agencement selon la revendication 6, dans lequel ladite unité de mesure inertielle peut mesurer les coordonnées de la tête de l'utilisateur dans un cadre de référence de l'environnement entourant le véhicule.

9. Agencement selon la revendication 8, dans lequel ladite unité de processeur (20) peut compenser les coordonnées de la tête de l'utilisateur par rapport au cadre de référence de l'environnement entourant le véhicule avec les coordonnées du véhicule par rapport au cadre de référence de l'environnement entourant le véhicule, lesdites coordonnées du véhicule étant délivrées par une unité de navigation (202) installée sur le véhicule pour dériver les coordonnées de la tête par rapport au cadre de référence du véhicule.

10. Agencement selon l'une quelconque des revendications précédentes, dans lequel une partie de l'information visuelle est affichée de façon fixe par rapport au cadre de référence du véhicule et une partie de l'information visuelle est affichée de façon fixe par rapport au cadre de référence de l'environnement entourant le véhicule.

11. Agencement selon la revendication 10, dans lequel la partie de l'information visuelle qui est fixe par rapport au cadre de référence de l'environnement entourant le véhicule a trait à une information de navigation générée de manière directe ou indirecte par l'unité de navigation (202) installée sur le véhicule.

12. Agencement selon l'une quelconque des revendications précédentes, dans lequel l'information d'importance critique est affichée dans la région centrale du champ de vision dans la direction dans laquelle la tête de l'utilisateur se trouve, et l'information restante est affichée dans les régions périphériques de ce champ de vision.

13. Agencement selon l'une quelconque des revendications précédentes, dans lequel le champ de vision présenté instantanément à l'utilisateur est plus petit que le champ de vision global traité par l'unité centrale (20) de sorte que l'utilisateur peut accéder à l'information présentée à l'extérieur du champ de vision instantané en tournant la tête, ladite rotation étant détectée par ledit moyen de détection de position (111) pour détecter la position et la rotation de la tête de l'utilisateur.

14. Agencement selon l'une quelconque des revendications précédentes, dans lequel un moyen (111b) est prévu pour suivre l'oeil permettant de mesurer les coordonnées de la pupille de l'utilisateur, c'est-à-dire la direction dans laquelle l'utilisateur regarde.

15. Agencement selon la revendication 14, dans lequel l'information d'importance critique est affichée dans la région du champ de vision proche de ladite direction dans laquelle l'utilisateur regarde, indépendamment de la direction dans laquelle la tête de l'utilisateur se trouve, et l'information restante est affichée dans les régions périphériques de ce champ de vision.

16. Agencement selon la revendication 14, dans lequel le champ de vision présenté instantanément à l'utilisateur est plus petit que le champ de vision global traité par l'unité centrale (20) de sorte que l'utilisateur peut accéder à l'information présente extérieure au champ de vision présentée instantanément par rotation de la pupille, ladite rotation étant détectée par ledit moyen de suivi d'oeil (111b).

17. Agencement selon l'une quelconque des revendications précédentes, comportant en outre un moyen pour transmettre (103) et/ou recevoir (114) des signaux sonores, pouvant permettre à l'utilisateur de recevoir une information audio depuis ladite unité de processeur (20), ladite information audio étant complémentaire de l'information vidéo générée par le moyen de génération d'images (102), et pour contrôler et/ou configurer ladite unité de processeur (20) par la voix.

18. Agencement selon l'une quelconque des revendications précédentes, comprenant en outre un moyen de capteur (112) pour détecter la clarté de l'arrière plan.

19. Agencement selon l'une quelconque des revendications précédentes, dans lequel ladite structure support (11) est formée par des lunettes, ledit élément d'écran transparent (12) étant formé par les verres de ces lunettes.

20. Agencement selon l'une quelconque des revendications 1 à 18, dans lequel ladite structure support (11) est formée par un casque, ledit élément d'écran transparent (12) étant formé par la visière de ce casque.

21. Agencement selon l'une quelconque des revendications précédentes, dans lequel l'unité d'interface pouvant être portée (10) est activée par batterie.

22. Agencement selon l'une quelconque des revendications précédentes, dans lequel au moins certaines des connexions entre les sous-unités du système sont des connexions sans fil, par l'intermédiaire de fréquences radio ou de signaux infrarouges.

23. Agencement selon l'une quelconque des revendications précédentes, ledit agencement étant prévu pour être installé dans des véhicules à moteur, automobiles ou bateaux.

24. Agencement selon l'une quelconque des revendications précédentes, ledit agencement étant prévu en tant que complément à un tableau de bord traditionnel.

25. Agencement selon l'une quelconque des revendications précédentes, ledit agencement étant prévu comme substitution à un tableau de bord traditionnel.

26. Agencement selon la revendication 14, dans lequel ledit moyen de suivi d'oeil (111b) est également prévu pour surveiller l'état de l'attention du conducteur dans le but d'empêcher les accidents.
